# EUROPÄISCHE PATENTANMELDUNG

(11) **EP 0 681 861 A2**
(43) Veröffentlichungstag der Anmeldung: **15.11.1995**
(21) Anmeldenummer: 95106325.4
(22) Anmeldetag: 27.04.1995
(51) Int. Cl.: B01D 63/08, B01D 65/08

(54) **Vorrichtung zum Filtrieren von Flüssigkeiten und Verfahren unter Verwendung der Vorrichtung**

(30) Priorität: 13.05.1994 DE 4416729
(71) Anmelder: URT Umwelttechnik GmbH, D-50354 Hürth (DE)
(72) Erfinder: Peters, Klaus, D-50321 Brühl (DE); Hilgendorff, Walter, D-21395 Tespe (DE); Kahn, Gerhard, D-21502 Geesthacht (DE)

(57) **Zusammenfassung**

Die vorliegende Erfindung betrifft eine Vorrichtung zum Filtrieren von Flüssigkeiten durch Umkehrosmose und/oder Mikrofiltration und/oder Ultrafiltration und/oder Nanofiltration, bei der sich der die Membranfilter und Verwirbelungsscheiben aufweisende Kernstapel in einem zylindrischen Druckrohr befindet, das mittels Dichtungs- und Endplatten nach außen abgeschlossen ist, wobei der Kernstapel unabhängig von den Dichtungs- und Endplatten mittels eines das Permeat führenden Kerns und einer Spannmutter zusammengepreßt wird und die Verwirbelungsscheiben auf einer oder beiden Seiten sich kreuzende, gewebeartig geformte Erhebungen (1) auf einer zentralen Scheibe aufweisen. Die Erfindung betrifft ferner ein Verfahren unter Verwendung der Vorrichtung.

## Beschreibung

Die vorliegende Erfindung betrifft eine Vorrichtung zum Filtrieren von Flüssigkeiten durch Umkehrosmose und/oder Mikrofiltration und/oder Ultrafiltration und/oder Nanofiltration, bei der sich der die Membranfilter und Verwirbelungsscheiben aufweisende Kernstapel in einem zylindrischen Druckrohr befindet, das mittels Dichtungs- und Endplatten nach außen abgeschlossen ist, wobei der Kernstapel unabhängig von den Dichtungs- und Endplatten mittels eines das Permeat führenden Kerns und einer Spannmutter zusammengepreßt wird und die Verwirbelungsscheiben auf einer oder beiden Seiten sich kreuzende, gewebeartig geformte Erhebungen auf einer zentralen Scheibe aufweisen. Die Erfindung betrifft ferner ein Verfahren unter Verwendung der Vorrichtung.

Vorrichtungen zum Filtrieren von Flüssigkeiten, insbesondere zur Wasserreinigung und Wasserentsalzung sind seit langem bekannt. Sie arbeiten nach dem Prinzip der Umkehrosmose oder sonstigen Filtrationstechnologien, bei denen Membrane als Filter eingesetzt werden, wobei durch Aufwendung von Druck, der größer sein muß als der osmotische Druck, Wasser oder auch andere Flüssigkeiten durch die Membranen gepreßt werden und ein die Verunreinigungen oder Salze enthaltendes Konzentrat zurückbleibt.

In der DE PS 2556210 ist z.B. eine Einrichtung zur Wasserentsalzung durch Umkehrosmose offenbart, in der zu entsalzendes Wasser einen Stapel von Modulplatten und Membranen durchströmt. Die Modulplatten weisen eine Querebene auf und zwei gegeneinander um 180° gedrehte Hälften. An aus dem Plattenstapel herausgeführten Rändern fließt das Permeat ab.

In der DE AS 2802780 ist eine Vorrichtung zur Wasserentsalzung und Wasserreinigung durch Umkehrosmose und Ultrafiltration beschrieben, die aus zwischen zwei Endplatten eingespannten, abwechselnd aufeinander gestapelten tellerartigen Trägerplatten und Wasserleitplatten und dazwischen liegenden Membranen besteht. Der Plattenstapel ist randseitig zusammengespannt. Innerhalb der Randabdichtungen befinden sich durchgehend aufeinander ausgerichtete, zum Ableiten des Permeats dienende Bohrungen.

Die DE PS 3507908 offenbart eine Vorrichtung mit Membranen, die auf Stützrahmen gelagert sind und mit diesen einen Stapel bilden, wobei sich die Dicke der Stützrahmen ändert bei gleichbleibend wirksamer Membranfläche. Auf diese Weise soll der Druckverlauf über die Verfahrensstrecke so einstellbar sein, daß gegen Ende der Verfahrensstrecke ein Druckgewinn mit einer Steigerung der Membranleistung erreichbar ist.

Die DE PS 3715183 offenbart eine Vorrichtung zum Filtrieren und Trennen von Strömungsmedien durch Umkehrosmose und Ultrafiltration, bei der zwischen mit einem zentralen Loch versehenen Abstandselementen ein Filterelement eingeschlossen ist. Das Filterelement ist als Membrankissen ausgebildet. Die Membrankissen sind durch Abstandselemente von einander getrennt. Letztere weisen auf wenigstens einer Seite eine Mehrzahl von erhaben von der Oberfläche wegstehenden Vorsprüngen auf. Die Abstandselemente weisen erhöhte Ränder auf, die den für die Membrankissen erforderlichen Raum schaffen. Die Vorsprünge sind kreisförmig und tropfenförmig. Der Filterstapel befindet sich in einem nach außen abgedichteten Rohr und wird durch einen zentralen Spannbolzen mit beidseitigen Muttern zusammengepreßt.

Obgleich sehr zahlreiche über den hier zitierten Stand der Technik hinausgehende Entwicklungen auf dem Gebiet der Filtration von Flüssigkeiten durch Umkehrosmose, Ultrafiltration, Mikrofiltration und Nanofiltration durchgeführt und publiziert wurden, besteht noch immer die Aufgabenstellung, die Filtriervorrichtung zu verbessern, insbesondere bezüglich Durchsatz und einfacher Montage bzw. Demontage.

Der Anmelderin ist es gelungen, eine solche Verbesserung mit der erfindungsgemäßen Vorrichtung zu erreichen sowie mit einem Filtrierverfahren unter Verwendung dieser Vorrichtung.

Die erfindungsgemäße Vorrichtung dient zum Filtrieren von Flüssigkeiten durch Umkehrosmose und/oder Mikrofiltration und/oder Ultrafiltration und/oder Nanofiltration mittels Membranen, wobei innerhalb eines zylindrischen Rohres ein Kernstapel angeordnet ist, der Membrantaschen und Verwirbelungsscheiben aufweist, wobei der Kernstapel um einen Zuganker angeordnet ist und das zylindrische Rohr auf beiden Seiten Dichtungsplatten und Endplatten aufweist, dadurch gekennzeichnet, daß die Verwirbelungsscheiben im Kernstapel auf einer oder beiden Seiten sich kreuzende, gewebeartig geformte Erhebungen auf einer zentralen Scheibe aufweisen, daß die Höhe der Erhebungen 0,25 bis 4 mm beträgt, daß die Länge der Erhebungen 1 bis 10 mm beträgt, daß die Anzahl der Erhebungen pro 1.000 cm² 200 bis 2.000 beträgt und daß die Erhebungen zu einer senkrecht zur Zulauföffnung auf der Scheibe liegenden imaginären Achse Winkel von 10 bis 75° bilden.

Die erfindungsgemäße Vorrichtung weist ein zylindrisches Rohr auf, das auch sehr hohem Innendruck standhält. Das Rohr ist an beiden Enden durch Endplatten abgeschlossen, unter denen sich Dichtungsplatten, die unterschiedlich konstruiert sein können, jedoch bevorzugt Dichtungsringe aufweisen, befinden. Die Dichtungsplatten können mit der jeweiligen Endplatte fest verbunden sein. Zwischen den Dichtungsplatten befindet sich ein Stapel von Verwirbelungsscheiben und Membrantaschen, die um einen als Rohr ausgebildeten, bevorzugt im Zentrum befindlichen Kern abwechselnd angeordnet sind und mittels einer Spannmutter zusammengepreßt werden können. Das Außenrohr besitzt einen solchen Durchmesser, daß der Stapel in das Außenrohr passend eingeführt werden kann, ohne daß Stapel oder Stapelkern im Rohrinneren fest mit den Dichtungsplatten oder Endplatten verbunden sein müssen. Die das Außenrohr abschließenden Endplatten besitzen einen größeren Durchmesser als das Außenrohr selbst, so daß sie über den Rand des Außenrohres hinausragen bzw. übergreifen. Im übergreifenden Teil befinden sich mindestens zwei Zuganker, mit denen die Endplatten auf die Rohrenden gepreßt werden können. Erfindungsgemäß kann man im Unterschied zum Stand der Technik den Stapel sehr leicht aus dem Außenrohr herausziehen, indem man die Zuganker außen löst und Endplatte und Dichtplatte an der der Flüssigkeitszuführungs- und -abführungseite abgewandten Seite abhebt. Hierdurch wird die Reinigung und Erneuerung von Teilen des Stapels sehr erleichtert. Da die Endplatten mit der zu reinigenden Flüssigkeit nicht in Kontakt kommen, können sie aus einfachen Stählen hergestellt sein.

An der Seite, an der die Flüssigkeitszuführung und die Flüssigkeitsabführungen in der Außenrohrendplatte angebracht sind, fließt die zu reinigende Flüssigkeit - bevorzugt handelt es sich um zu reinigendes bzw. zu entsalzendes Wasser - durch ein Rohr in den Innenraum um den Stapel herum zur entgegengesetzten Stapelseite und dort auf eine erste, endseitig im Stapel vorliegende Verwirbelungsscheibe. Die Verwirbelungsscheibe weist auf wenigstens einer Seite auf der Scheibenfläche Erhebungen auf, die noch im einzelnen zu beschreiben sind. Die Verwirbelungsscheiben besitzen segmentartige seitliche Zu- bzw. Abflüsse, wobei diese von Scheibe zu Scheibe bevorzugt um 180° gegeneinander versetzt sind, also sich gegenüberstehen. Andere Versetzungen sind ebenfalls möglich. Die Form der Zu- bzw. Abflüsse kann ebenfalls von der Segmentform abweichen. Die zu reinigende Flüssigkeit fließt durch ein Zuflußsegment in eine Kammer in der sich die Membrantasche befindet, umflutet diese, wobei das Permeat in die Membrantasche eindringt und fließt zur anderen Seite der Kammer, auf der sich am Rande wiederum der segmentartige Abfluß befindet.

Der Druck, der auf der Membrantasche lastet, kann bis zu 200 bar betragen. Der anzuwendende Druck ist abhängig von der Art der Membran, dem Vorrichtungsdurchmesser und der zu reinigenden Flüssigkeit.

Das Permeat gelangt, wie weiter unten beschrieben, in das Innere des Stapelkerns und fließt ebenfalls über eine Öffnung in der Endplatte nach außen ab.

Die Membrantasche ist gegen die beidseitigen Verwirbelungsscheiben um den Kern herum mittels Dichtungsringen, die teilweise in die Verwirbelungsscheibén eingebettet sind, abgedichtet, so daß das in das Innere der Membrantasche eingedrungene Permeat in das Innenrohr des Kern abfließen muß und sich nicht mit zu reinigender Flüssigkeit rückvermischen kann.

Das Permeat fließt durch das Innenrohr aus der Vorrichtung nach außen, ebenso fließt das Konzentrat auf dem oben beschriebenen Weg durch die einzelnen Kammern bis zum Ausgangsrohr. Die Scheibenteile, welche die Öffnungen bilden, durch die das Permeat zum Innenrohr fließt und die auf der Verwirbelungsplatte um das Kernrohr herum angeordnet sind können unterschiedliche Formen aufweisen, so können sie z.B. schlitzförmig, trapezförmig oder abgerundet und segmentartig sein. Andere Formen sind ebenfalls möglich. Das durch die Öffnungen hindurchtretende Permeat gelangt an die Außenfläche des Kernrohrs und kann durch Bohrungen in der Wand desselben in das Rohrinnere gelangen und abfließen.

Die Erhebungen auf den Verwirbelungsplatten sind einem gewebeartigen Muster ähnliche, sich kreuzende Vorsprünge auf einer zentralen Platte, wobei die Vorsprünge oberhalb und unterhalb der Platte vorliegen können.
Die Vorsprünge besitzen eine bestimmte Länge, die größer ist als die Breite. Die Länge beträgt 1 bis 10, bevorzugt 2 bis 8 und besonders bevorzugt 2 bis 5 mm.

Zwischen den einzelnen Vorsprüngen auf einer "Fadenlinie" sind Flächenbereiche ohne Erhebungen, die nur von Vorsprüngen unter einem bestimmten Winkel durchkreuzt werden, die auf einer die erste "Fadenlinie" kreuzenden zweiten "Fadenlinie" liegen.

Denkt man sich zentral und senkrecht zum Zufluß- bzw. Abflußsegment eine Achse, So betragen die Winkel der "Fäden" zu dieser Achse 10 bis 75°, bevorzugt 20 bis 60° und besonders bevorzugt 25 bis 45°. Die Winkel einzelnen "Fäden" können auch unterschiedlich sein.

Die Höhe der Erhebungen beträgt 0,25 bis 4 mm, bevorzugt 0,3 bis 2,5 mm und besonders bevorzugt 0,5 bis 2 mm. Der Querschnitt der Erhebungen kann unterschiedlich sein, z.B. trapezartig sich nach oben verjüngen, rechteckig oder nach oben abgerundet sein. Andere Formen sind ebenfalls möglich. Bei trapezartiger Anordnung kann z.B. die Breite unten 2,5 bis 3,5 mm sein und oben 1 bis 2 mm.

In Längsrichtung kann die Höhe unterschiedlich sein, z.B. in der Mitte am höchsten, oder in Fließrichtung zu- oder abnehmen.

Die Verwirbelungsscheiben weisen außen eine Randverdickung auf, die den Raum schafft, in der die Membrantasche Platz findet. Innen um die Randverdickung können sich punktförmige Erhebungen befinden.

Durch die erfindungsgemäßen Erhebungen und deren Anordnung ist überraschend eine wesentlich verbesserter Durchsatzleistung durch einen Filterstapel möglich. So kann die Filtratleistung gegenüber üblichen tropfenförmigen, willkürlich angeordneten Erhebungen bei gleicher zu reinigender Flüssigkeit und gleichen Abmessungen des Stapels um bis zu 50 % erhöht werden.

Die Verwirbelungsplatten bestehen im allgemeinen aus Kunststoff, wie z.B. Polystyrol, Acrylnitril-Butadien-Styrol-Copolymeren (ABS), aus Styrol-Acrylnitril-Copolymeren(SAN) und anderen Kunststoffen wie z.B. dem Kunststoff Luran der BASF.

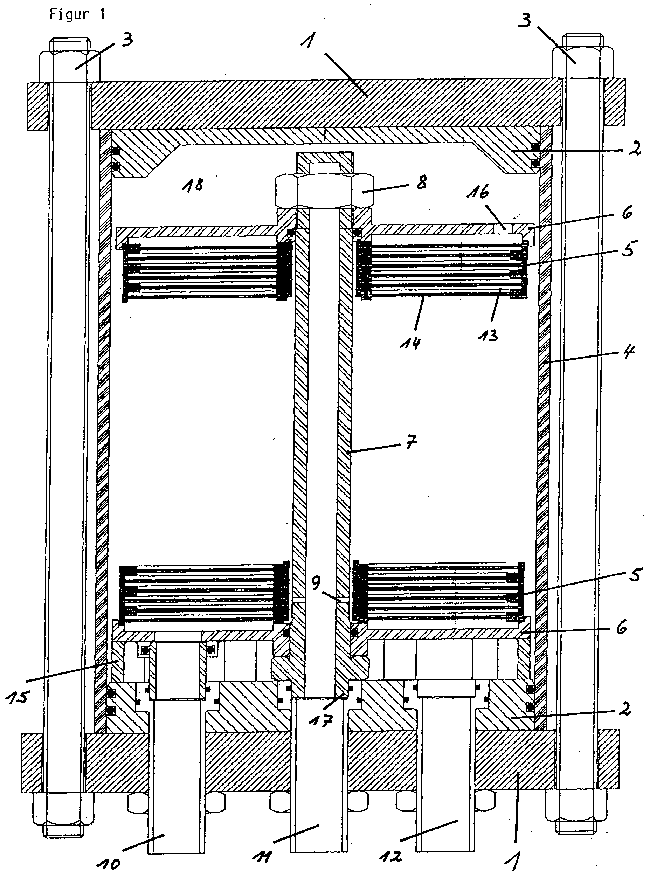

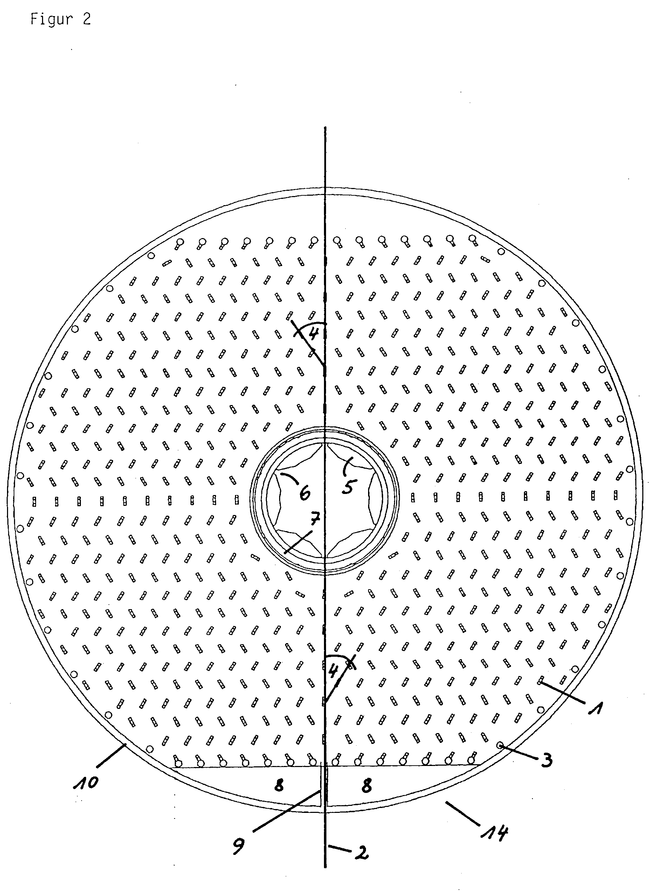

Die Erfindung soll nunmehr mit Hilfe der Figuren 1 und 2 näher erläutert werden.
Figur 1 stellt eine erfindungsgemäße Vorrichtung dar.
Figur 2 stellt eine Verwirbelungsscheibe dar.

In Figur sind 1 die Endplatten, 2 die Dichtungsplatten, 3 die Zuganker, mit denen die erfindungsgemäße Vorrichtung zusammengeschraubt ist. 4 stellt das Außenrohr dar, in dem sich der Stapel 5 befindet. 6 ist eine mit Löcher versehene Endplatte. 7 ist der rohrartige Kern des Filterstapels. 8 ist die Mutter, mit der der Stapel zusammengepreßt wird. 9 ist eine der Bohrungen im Kernrohr, durch die das Permeat in das Innere des Rohres gelangt und durch 11 abfließen kann. 10 stellt den Zufluß für die zu reinigende Flüssigkeit dar. 12 ist der Abfluß für das Konzentrat. 13 stellt den Raum in einem Stapel dar, in dem sich eine Membrantasche befindet. 14 stellt eine Verwirbelungsplatte dar. 15 ist einer von zahlreichen Stahlfüßen, auf dem die Endplatte des Stapels lastet. Durch die Zwischenräume der Füße kann die eintretende Flüssigkeit nach oben in den Raum 18 gelangen und durch Öffnungen 16 auf die oberste Verwirbelungsplatte des Filterstapels fließen. Der Filterstapel ruht zusätzlich zentral auf der Dichtungsplatte im Bereich 17.

In Figur 2 ist eine Verwirbelungsplatte dargestellt. 1 stellt eine der Erhebungen dar. 2 ist die imaginäre Achse, die durch die Mitte des Zu- bzw. Abflusses 8 gelegt ist und zu der die Erhebungen 1 in bestimmten Winkeln 4 angeordnet sind. 5 stellt eine der segmentartigen Anordnungen dar, die die Durchtrittsöffnungen 6 für das Permeat zur Außenwand des Kernrohres bilden. 7 ist ein Abdichtungsring. 9 ist ein Steg, der den Zu- bzw. Ablauf unterteilt. Das Segment kann jedoch auch ohne einen solchen Steg vorliegen. 10 ist die Randverdickung und 3 stellt eine der punktartigen, im Inneren der Umrandung angeordneten Erhebungen dar.

## Patentansprüche

1. Vorrichtung zum Filtrieren von Flüssigkeiten durch Umkehrosmose und/oder Mikrofiltration und/oder Ultrafiltration und/oder Nanofiltration mittels Membranen, wobei innerhalb eines zylindrischen Rohres ein Kernstapel angeordnet ist, der Membrantaschen und Verwirbelungsscheiben aufweist, wobei der Kernstapel um einen Zuganker angeordnet ist und das zylindrische Rohr auf beiden Seiten Dichtungsplatten und Endplatten aufweist, wobei letztere über den Durchmesser des zylindrischen Rohres übergreifen und im übergreifenden Bereich mittels Zugankern zusammengehalten werden und wobei der Kernstapel mittels eines Kerns mit einer Spannmutter unabhängig von den Dichtungsplatten und Endplatten zusammengepreßt wird, dadurch gekennzeichnet, daß die Verwirbelungsscheiben im Kernstapel auf einer oder beiden Seiten sich kreuzende, gewebeartig geformte Erhebungen auf einer zentralen Scheibe aufweisen,
daß die Höhe der Erhebungen 0,25 bis 4 mm beträgt,
daß die Länge der Erhebungen 1 bis 10 mm beträgt,
daß die Anzahl der Erhebungen pro 1.000 cm² 200 bis 2.000 beträgt,
und daß die Erhebungen zu einer senkrecht zur Zulauföffnung auf der Scheibe liegenden imaginären Achse Winkel von 10 bis 75° bilden.

2. Vorrichtung nach Anspruch 1, dadurch gekennzeichnet, daß die Erhebungen zu einer senkrecht zur Zulauföffnung auf der Scheibe liegenden imaginären Achse in unterschiedlichen Winkeln angeordnet sein können.

3. Vorrichtung nach wenigstens einem der Ansprüche 1 und 2, dadurch gekennzeichnet, daß die Höhe der Erhebungen 0,3 bis 2,5 mm, bevorzugt 0,5 bis 2,0 mm beträgt.

4. Vorrichtung nach wenigstens einem der Ansprüche 1 bis 3, dadurch gekennzeichnet, daß die Länge der Erhebungen 2 bis 8 mm, bevorzugt 2 bis 5 mm beträgt.

5. Vorrichtung nach wenigstens einem der Ansprüche 1 bis 4, dadurch gekennzeichnet, daß der Winkel zur imaginären Achse 20 bis 60° und bevorzugt 25 bis 45° beträgt.

6. Vorrichtung nach wenigstens einem der Ansprüche 1 bis 5, dadurch gekennzeichnet, daß der Kernstapel abwechselnd aus Verwirbelungsscheiben und Membrantaschen aufgebaut ist.

7. Vorrichtung nach wenigstens einem der Ansprüche 1 bis 6, dadurch gekennzeichnet, daß der Zuganker zentral in den Stapelplatten angeordnet ist.

8. Vorrichtung nach wenigstens einem der Ansprüche 1 bis 7, dadurch gekennzeichnet, daß die Verwirbelungsscheiben eine äußere Randverdickung aufweisen, die mindestens die Höhe der Erhebungen auf den Scheiben aufweist.

9. Vorrichtung nach wenigstens einem der Ansprüche 1 bis 8, dadurch gekennzeichnet, daß die Anzahl der Erhebungen pro 1.000 cm² 400 bis 1600, bevorzugt 600 bis 1000 beträgt.

10. Vorrichtung nach wenigstens einem der Ansprüche 1 bis 9, dadurch gekennzeichnet, daß das Kernrohr im Inneren des Stapels Bohrungen aufweist, durch die das Permeat in das Rohrinnere gelangt und nach außen abfließen kann.

11. Vorrichtung nach wenigstens einem der Ansprüche 1 bis 10, dadurch gekennzeichnet, daß die Verwirbelungscheibe am Rande wenigstens einen Zu- bzw. Abfluß aufweist, der bevorzugt segmentartig ausgebildet ist.

12. Vorrichtung nach wenigstens einem der Ansprüche 1 bis 11, dadurch gekennzeichnet, daß der Kernstapel mit Öffnungen versehene Stapelendplatten aufweist.

13. Verfahren unter Verwendung der Vorrichtung nach den Ansprüchen 1 bis 12.
